# NEUE EUROPÄISCHE PATENTSCHRIFT

(11) **EP 0 324 454 B2**
(45) Veröffentlichungstag und Bekanntmachung des Hinweises auf die Entscheidung über den Einspruch: **30.08.2000**
(45) Hinweis auf die Patenterteilung: 19.05.1993
(21) Anmeldenummer: 89100423.6
(22) Anmeldetag: 11.01.1989
(51) Int. Cl.: B01D 50/00, F23J 15/00

(54) **Verfahren und Vorrichtung zur Reinigung von Rauchgasen**
Process and apparatus for cleaning smoke
Procédé et dispositif pour la purification des gaz de fumée

(30) Priorität: 14.01.1988 DE 3800881; 07.12.1988 DE 3841217; 07.12.1988 DE 3841219; 07.12.1988 DE 3841221
(43) Veröffentlichungstag der Anmeldung: 19.07.1989
(73) Patentinhaber: SIEMENS AKTIENGESELLSCHAFT, 80333 München (DE)
(72) Erfinder: Ranly, Hans, Dr., D-8525 Marloffstein (DE); Totzauer, Wolfgang, Dipl.-Ing., D-8520 Erlangen (DE); Spitznagel, Günther, Dr., D-8520 Erlangen (DE); Schmelz, Helmut, Dr., D-8210 Prien (DE); Hums, Erich, Dr., W-8520 Erlangen (DE)

(56) Entgegenhaltungen:
- DE-A- 3 101 455
- DE-B- 1 285 689
- DE-C- 3 320 466
- DE-C- 3 614 814
- H. Vogg, A. Christman, K. Wise: "Das 3R-Verfahren - ein Baustein zur Schadstoffminderung bei Abfallverbrennungsanlagen" in Recycling von Haushaltsabfällen, EF-Verlag Berlin 1987, Seiten 471 bis 481
- Römpps Chemie-Lexikon, 7. Auflage, Stuttgart 1973, Seiten 1162, 1163 und 1291 bis 1293,
- D.O. Reiman: "Negative Wechselwirkungen zwischen Kläranlagen und Müllverbrennungsanlagen infolge thermischer Faulschlammkonditionierung" in Recycling International, EF-Verlag Berlin 1984, Seiten 532 bis 537
- WO 88/02284, Priorität 02.10.1986, veröffentlicht 07.04.1988,
- DE-A-31 01 455, veröffentlicht 18.02.1982
- DE-C-33 20 466, veröffentlicht 30.04.1987 und H. Hagenmaier, M. Kraft, R. Haag, H. Brunner, O. Hasenkopf, A. Nonnenmacher, E. Auchter: "Primär- und Sekundärmassnahmen zur Minimierung von Dioxin-Emissionen bei Müllverbrennungsanlagen" in Müllverbrennung und Umwelt, EF-Verlag Berlin 1987, Seiten 554-572

## Beschreibung

Die Erfindung bezieht sich auf ein Verfahren und eine Vorrichtung zur Reinigung von Rauchgasen von Verbrennungsgroßanlagen.

Insbesondere bei der Verbrennung von Haus- und Sonderabfällen können die in den nachgeschalteten Abscheidesystemen, also Staubfilteranlagen wie Zyklone, Elektrofilter, usw. und Naßwäscher anfallenden Flugstäube wegen ihres Gehaltes an löslichen Schwermetallen, an Dioxinen und Furanen nicht weiter verwendet werden. Es ist daher üblich, solche Flugstäube in Sonderdeponien zu lagern. Dieses Verfahren ist einfach, aber auf die Dauer wegen der großen Mengen an Material recht problematisch.

Durch die DE-C-36 14 814 ist bereits ein Verfahren zur Behandlung solcher Flugstäube bekanntgeworden, bei dem die in Zyklonen und Elektrofiltern trocken abgeschiedenen Flugstäube mit dem sauren Waschwasser der dem trockenen Abscheidesystem nachgeschalteten nassen Rauchgasreinigung ausgelaugt werden. Dabei gehen die Schwermetalle in Lösung. Der so ausgelaugte Flugstaub kann dann, nachdem er einer thermischen Behandlung zur Dioxinzersetzung unterworfen worden ist, weiter verwertet werden. Das in der Rauchgasreinigung anfallende, durch die ausgewaschenen Sulfate und Chloride saure Wasser wird bei diesem unter dem Namen 3-R-Verfahren bekannten Prozess einer Schwermetallfällung unterzogen. Der Schwermetallschlamm, der nur noch wenige Prozente der ursprünglich abgeschiedenen Staubmenge umfaßt, kann entweder endgelagert oder zu den Reinmetallen aufgearbeitet werden. Mit diesem Verfahren können Flugstäube auch aus der Hausmüll- und Sonderabfallverbrennung sicher gehandhabt werden. Selbst wenn man auf die Aufarbeitung der Schwermetalle zu den Reinmetallen verzichtet, haben die dann in Sonderdeponien abzulagernden Reststoffe nur noch ein Volumen, das wenige Prozente des ursprünglichen Volumens ausmacht. Diesen Vorteilen steht der erhebliche technische Aufwand für die Schwermetallfällung und für die Dioxinzersetzung in der ausgelaugten Flugasche gegenüber.

Aber auch bei der Verbrennung von Kohle, die zum Beispiel durchschnittlich ca. 10 ppm Arsen enthält, treten Probleme mit den Rauchgasen auf. Dabei entsteht das Arsenoxid As₂O₃, das aufgrund seiner äußerst hohen Flüchtigkeit den Verbrennungsraum nahezu vollständig mit den Rauchgasen verläßt. Dies führt zu einer vorzeitigen Vergiftung von nachgeschalteten Katalysatoren zur weiteren Entgiftung der Rauchgase, erhöht somit den Aufwand für die weitere Rauchgasentgiftung und belastet außerdem die Umwelt.

Für den zum Teil sehr feinkörnig in den Staubfiltern anfallenden Flugstaub, dessen Partikel teilweise nur weniger Mikrometer Durchmesser aufweisen, ergeben sich jedoch weitere Entsorgungsschwierigkeiten. Der mit Schwermetallen belastete Flugstaub muß ebenfalls gesondert deponiert werden. Als feinkörniger Staub kann er jedoch nicht einfach auf einer offenen Halde gelagert werden, da sonst bei Wind die Gefahr der Verwehung und weiträumigen Verteilung des Staubs in der Umwelt besteht.

Neben dem Trockenfeuerungsverfahren gibt es insbesondere bei Kohlekraftwerken auch noch das Schmelzkammerfeuerungsverfahren, bei dem wegen der gegenüber dem Trockenfeuerungsverfahren erhöhten Kesseltemperatur von ca. 1600°C die Asche in flüssiger Form anfällt. Als solche kann sie aus dem Verbrennungskessel abgelassen werden und durch Abschrecken in eine Schlacke überführt werden. Diese weist eine gröbere Beschaffenheit auf und kann sowohl auf Deponie gelagert werden, als auch bei geringerer Belastung als Baumaterial verwendet werden (DE-A-37 17 193). Der auch bei diesem Verfahren, wenn auch im geringeren Ausmaß auftretende Flugstaub wird bei einigen Anlagen in den Verbrennungskessel bzw. in die darin befindliche Flüssigasche zurückgeführt und dabei zum Teil in die Schlacke eingebunden. Besonders flüchtige Verunreinigungen können dabei jedoch aufgrund der hohen Oberfläche der Flugstaubpartikel ungehindert von diesen wieder abdampfen, sobald sie im Verbrennungsraum den darin herrschenden hohen Temperaturen ausgesetzt werden. Gerade das flüchtige Arsenoxid wird so im Verbrennungskreislauf stark aufkonzentriert und gelangt in überhöhtem Anteil an die Umwelt.

Der Erfindung liegt daher die Aufgabe zugrunde, den technischen Aufwand für die Behandlung von Flugstäuben bei der Verbrennung von Kohle, Hausmüll oder Sonderabfällen zu verringern, ohne indessen die Menge der in Sonderdeponien abzulagernden Reststoffe zu vergrößern.

Die Aufgabe wird durch die Merkmale des Anspruchs 1 und des Anspruchs 3 gelöst, weitere vorteilhafte Ausgestaltungen der Erfindung sind den Ansprüchen 2 sowie 4 bis 35 zu entnehmen.

Dadurch, daß erfindungsgemäß der größte Teil der von den Rauchgasen mitgeführten Feststoffe (Flugasche) durch trockene Staubfilterung abgetrennt, die restlichen Feststoffe in einer nachgeschalteten sauren Rauchgaswäsche abgeschieden werden und dabei gemäß Patentanspruch 1 die Feststoffe der trockenen Staubfilterung mit den enthaltenen Schwermetallen gegebenenfalls zusammen mit Müll und/oder zu einem Glas schmelzenden Zuschlägen in der Brennkammer der Verbrennungsgroßanlage eingeschmolzen oder dabei gemäß Patentanspruch 3 die Feststoffe der trockenen Staubfilterung zusammen mit verbrauchten Katalysatoren als Zuschlag in der Brennkammer der Verbrennungsgroßanlage eingeschmolzen werden, und die in der Rauchgaswäsche abgeschlämmten Feststoffe ausgelaugt und filtriert werden, wird der größte Teil der Schwermetalle mit verhältnismäßig geringem Aufwand in der sich bildenden Schlacke unlöslich eingeschlossen. Dabei kann das Schlackengranulat für bestimmte Bauzwecke weiter verwendet werden. Zugleich werden bei den beim Einschmelzen des Flugstaubes vorherrschenden hohen Temperaturen - die meist über 1.100 °C liegen - alle Dioxine in unschädliche Substanzen zersetzt. Weil beim Einschmelzen einer mit Schwermetallen beladenen Flugasche Teile dieser Schwermetalle unvermeidlicherweise wieder verdampfen, würde eine allmähliche unerwünschte Aufkonzentration der Schwermetalle im Rauchgas der Schmelzkammer stattfinden. Diese Aufkonzentration von Schwermetallen im Rauchgas wird nun zum einen dadurch begrenzt, daß der Wirkungsgrad der trockenen Staubfilterung ebenfalls begrenzt ist, so daß ein ständiger Schlupf durch den Staubfilter hindurch und in die nachgeschaltete Rauchgaswaschanlage stattfindet. Dort wird der restliche Flugstaub aufgefangen und als ausgelaugter Schlamm abgefiltert. Gegebenenfalls kann die Aufkonzentration der Schwermetalle durch Veränderung des Abscheidegrades des Staubfilters auf einen bestimmten Wert eingestellt werden. Durch diese Vorgehensweise wird die Menge der ausgelaugten Feststoffe und damit auch der Aufwand für deren Weiterbehandlung minimiert.

Der geringstmögliche Aufwand läßt sich erreichen, wenn in Weiterbildung der Erfindung der in der sauren Rauchgaswäsche abgeschlämmte Feststoff lediglich entwässert und sodann in einer Sonderdeponie abgelagert wird.

Für die Aufschmelzung des Flugstaubs ist es weiterhin von Vorteil, wenn der Flugstaub erfindungsgemäß vor dem Aufschmelzen zu größeren Formkörpern wie zum Beispiel Briketts oder Pellets verpreßt wird. Durch die Herstellung von Formkörpern wird die Gesamtoberfläche des aufzuschmelzenden Materials gegenüber den Flugstaubpartikeln verringert. Dies hat den Vorteil, daß durch die geringere Oberfläche das Abdampfen von flüchtigen Verunreinigungen zum Beispiel von Arsenoxid reduziert wird, oder daß sich die Formkörper besser in die Schmelze einbinden lassen. Die Größe der Formkörper ist dabei auf die Verweildauer der Formkörper in der Schmelze abgestimmt. Sie sollte derart bemessen sein, daß die Formkörper gerade eben geschmolzen sind, wenn die Schmelze zur Erzeugung einer Schlacke abgelassen wird. Da dieser Vorgang im Normalfall jedoch kontinuierlich abläuft, müssen weitere Parameter zur Optimierung beachtet werden, zum Beispiel der Pegelstand der Schmelze, bzw. der Flüssigasche im Verbrennungskessel einer Schmelzkammerfeuerungsanlage. Als gut geeignet haben sich Formkörper mit einem mittleren Durchmesser zwischen 0,5 und 10 cm, insbesondere zwischen 1 und 5 cm bewährt.

Zur Herstellung der Formkörper werden die feinkörnig anfallenden Flugstaubpartikel mit etwas Wasser als Bindemittel versetzt und unter Anwendung von Druck und gegebenenfalls erhöhter Temperatur zu Formkörpern verpreßt. Es kann dabei ganz analog dem bekannten Verfahren zur Herstellung von Kohlebriketts gearbeitet werden.

In besonders vorteilhafter Weiterbildung der Erfindung kann auch der in der sauren Rauchgaswäsche abgeschlämmte Feststoff eingeschmolzen werden. Hierbei läßt sich dieser Feststoff zusammen mit den durch die trockene Staubfilterung abgeschiedenen Feststoffen vermischen.

Eine hervorragende Einbindung des Flugstaubs in eine Schlacke wird erreicht, wenn dem Flugstaub vor dem Einschmelzen Zuschläge beigemischt werden, die zu einem Glas schmelzen. Zusammen mit den glasbildenden Zuschlägen kann der Flugstaub direkt in die Flüssigasche eingebracht werden. Besser werden aber auch in diesem Fall Formkörper erzeugt. Dazu kann hier zusätzliches Bindemittel erforderlich sein.

Die glasartige Schlacke schließlich weist aufgrund ihrer grobkörnig bis brockenförmigen Beschaffenheit eine deutlich niedrigere Oberfläche als der Flugstaub auf und bietet im Zusammenhang mit der physikalischen und chemischen Stabilität des Glases die Gewähr dafür, daß die Gefährdung der Umwelt stark reduziert wird. Die Gefahr durch Verflüchtigung, Verwehung, Auswaschung oder sonstige Verbreitung von giftigen oder die Umwelt gefährdenden Bestandteilen der Flugasche wird minimiert. Gleichzeitig wird eine leichtere Deponierung bzw. sogar nutzbringende Verwendung der Schlacke ermöglicht. Gegenüber bereits bekannten Verfahren der Einbindung des Flugstaubs in Schlacke stellt das erfindungsgemäße Verfahren nicht nur im Ergebnis die beste Möglichkeit dar, sondern weist auch vom Verfahren her deutliche Vorteile auf. So liegt zum Beispiel der Schmelzpunkt von Glas deutlich unter dem mittleren Schmelzpunkt der Flugstaubpartikel bzw. deren Bestandteile. So ist für die Einbindung in die Schlacke eine niedrigere Temperatur als bei bekannten Verfahren erforderlich, was zum einen eine Energieersparung einbringt und zum anderen die Gefahr des Abdampfens von flüchtigen Verunreinigungen bzw. Bestandteilen des Flugstaubs verringert.

Für die Bemessung des als Zuschlag zuzufügenden Glasanteils ist die Zusammensetzung der Flugasche entscheidend. Es sollte jedoch so viel Glasanteil zugefügt werden, daß eine homogene Schmelze erreicht wird, und daß die Schlacke die gewünschte Konsistenz aufweist. Zur Homogenisierung werden die einzuschmelzenden Materialien (Flugasche und Zuschläge) fein vermahlen, bevor sie gegebenenfalls zu Formkörpern verpresst werden. Die Auswahl der glasbildenden Zuschläge ist praktisch nicht begrenzt, doch sollte das zu erzeugende Glas unterhalb von 1000 °C, besser noch zwischen 500 und 800 °C schmelzen. Aus wirtschaftlichen Überlegungen heraus wird Altglas als Zuschlag verwendet, insbesondere Altglasscherben. Grundsätzlich ist auch möglich, die zu einem Glas schmelzenden Zuschläge in Form von glasbildenden Komponenten einzusetzen, zum Beispiel Sand, Soda usw. Damit werden zwar die im Aufbau bzw. der Beschaffenheit der Schlacke begründeten Vorteile erzielt, doch muß zum Schmelzen eines Glases aus Einzelkomponenten eine deutlich höhere Temperatur aufgewendet werden. Dies hat sowohl wirtschaftliche als auch die bereits erwähnten technischen Nachteile, wie zum Beispiel Abdampfen flüchtiger Verunreinigungen während des Schmelzvorganges.

Die Einbindung des Flugstaubs in die Schlacke durch Rückführung in den Verbrennungskessel sollte (als Briketts) so erfolgen, daß der samt den zu Glas schmelzenden Zuschlägen zu Formkörpern verarbeitete Flugstaub möglichst direkt in die Flüssigasche eingebracht wird, ohne allzu lange im Verbrennungsraum über der Flüssigasche zu verweilen. Durch diese genannten Maßnahmen wird vermieden, daß die in die Verbrennungsanlage zurückgeführten Verunreinigungen, insbesondere die Schwermetalle, wieder in den Verbrennungskreislauf gelangen. Mit der vollständigen Einbindung der Flugasche in die Schmelze kommt es zu keiner Aufkonzentration der Schadstoffe, insbesondere in den Rauchgasen. Damit verbindet sich eine verlängerte Lebensdauer des nachgeschalteten DeNOₓ-Katalysators, was zu längeren Betriebszyklen führt. Das heißt, daß die Zeit zwischen zwei eine Abschaltung der gesamten Anlage bedingenden Katalysatorauswechslungen verlängert wird. Dadurch werden die relativ hohen Kosten, die der Betrieb einer DeNOₓ-Anlage erfordert, weiter reduziert.

Bei Kohlekraftwerken mit Schmelzkammerfeuerung bietet das erfindungsgemäße Verfahren in vorteilhafter Weise die Möglichkeit, als Müll insbesondere mit Schwermetall belasteten Müll in fein gemahlener Form einzusetzen und so in die Schlacke einzubinden. Insbesondere verbrauchte Filter, Katalysatoren und dergleichen können dazu in feingemahlener Form als Zuschlag zugemischt werden. Gegebenenfalls können in diesem Müll vorhandene Wertstoffe (zum Beispiel Edelmetalle) vorher entzogen werden.

Für die weitere Entsorgung ist es erforderlich, das saure Abschlämmwasser nach der Filterung mit einem Fällungsmittel zu versetzen und einer Schwermetallfällung zu unterziehen. Hierdurch wird weitgehend schwermetallfreies Abwasser und Schwermetallschlamm erzeugt.

In zweckmäßiger Ausgestaltung der Erfindung können die ausgefällten Schwermetallschlämme zur Abtrennung von Quecksilberverbindungen einer thermischen Behandlung unterzogen werden. Hierdurch wird erreicht, daß die Quecksilberverbindungen an kühleren Stellen des Behandlungsvolumens ausfallen und getrennt aufgefangen werden können.

Es hat sich dabei als besonders vorteilhaft erwiesen, wenn in Weiterbildung der Erfindung die thermische Behandlung zur gleichzeitigen Zersetzung der Dioxine und Furane unter Luftabschluß erfolgt. Unter diesen Voraussetzungen ist eine Zersetzung dieser Schadstoffe zu ungefährlichen Substanzen bereits bei Temperaturen möglich, die unter 500° C liegen.

Weitere Einzelheiten der Erfindung werden anhand von zwei in Figuren dargestellter Ausführungsbeispiele erläutert. Es zeigt:
- Die Figur 1: eine schematische Darstellung einer erfindungsgemäßen Anlage zur Verbrennung von Hausmüll bzw. Sonderabfällen.
- Die Figur 2: eine schematische Darstellung des erfindungsgemäßen Verfahrens, wie es bei Kohlekraftwerken mit Schmelzkammerfeuerungsanlagen eingesetzt werden kann.

### Figur 1:

Die dargestellte Verbrennungsanlage 1 umfaßt eine als Schmelzkammer 2 ausgebildete Hochtemperaturbrennkammer, mit einer Brennstoffzuführungsleitung 3, einer über einen Verdichter 4 geführte Frischluftleitung 5, einer Abzugsleitung 6 für die schmelzflüssige Asche mit einem angeschlossenen Naßentschlacker 7, einer Rauchgasleitung 8 und in der Rauchgasleitung in Serie geschalteten Staubfilteranlage 9, Rauchgaswaschanlage 10, DeNOx-Anlage 11 und Kamin 12. Von der Staubfilteranlage 9 führt eine Staubabzugsleitung 13 in eine Zumischstation 14 für Zuschläge und von dort in die Ascheschmelzkammer 2 zurück. In der Zumischstation 14 mündet eine mit einem Zuschlagsbehälter 15 verbundene Zuführleitung 16. Die Rauchgaswaschanlage 10 ist über eine Abschlämmleitung an eine Filtervorrichtung 17 für die ausgewaschenen Feststoffe angeschlossen. Die Abzugsleitung 18 für die abgefilterten Feststoffe mündet in die Staubabzugsleitung 13 des Staubfilters 9. Die Abzugsleitung 19 für das Filtrat führt von der Filtervorrichtung 17 in eine Anlage 20 zur Schwermetallausfällung. Die Anlage zur Schwermetallausfällung ist mit einer Zugabeöffnung 21 für Fällungsmittel versehen. An dieser Anlage 20 zur Schwermetallausfällung ist eine Anlage 22 zur thermischen Aufheizung der abgetrennten Schwermetalle angeschlossen.

Beim Betrieb der Verbrennungsanlage 1 werden die Brennstoffe, wie etwa Kohle, getrockneter und zerkleinerter oder pellitierter Hausmüll oder entsprechende Sonderabfälle, über die Brennstoffleitung 3 in die Schmelzkammer 2 eingeführt und mit über die Leitung 5 zugeführter verdichteter Luft verbrannt. Die entstehenden Rauchgase strömen über die Rauchgasleitung 8 in die Staubfilteranlage 9, wo der größte Teil, jedoch nicht die gesamte Menge der in den Rauchgasen mitgeführten Feststoffe, im wesentlichen Flugasche, aufgefangen werden. Diese aufgefangenen Feststoffe werden über die Staubabzugsleitung 13 über eine Zumischstation 14 für Flußmittel in die Schmelzkammer 2 zurückgeführt. Als glasbildende Zuschläge eignen sich beispielsweise Kalziumoxid und Glasstaub, die aus dem Zuschlagbehälter 15 zudosiert werden können. Das Flugasche-Zuschlaggemisch wird bei den hohen Temperaturen der Schmelzkammer aufgeschmolzen, fließt an den Wänden der Schmelzkammer herab und gelangt über die Abzugsleitung 6 in den Naßentschlacker 7, wo es sich zu grobem Granulat verfestigt. Bei der Schmelztemperatur der Flugasche, die meist über 1100° C liegt, werden alle Dioxine und Furane in unschädliche Stoffe zersetzt. Daher enthält das sich im Naßentschlacker bildende grobe Granulat allenfalls noch Schwermetalle. Diese sind jedoch im Granulat sicher und unlöslich umschlossen. Dieses Granulat ist daher zu Zwecken des Straßenbaus und ähnliche Anwendungen einsetzbar.

Weil bei Verbrennungsanlagen mit Schmelzkammerfeuerungen immer ein Teil der Schwermetalle verdampft bevor diese in der Schlacke eingeschlossen werden können, könnte bei einem solchen Kreislauf allmählich eine Aufkonzentration der Schwermetalle im Rauchgas erfolgen. Diese Aufkonzentration wird durch die Zulassung eines Schlupfes durch die Staubfilteranlage 9 hindurch begrenzt. Dieser Schlupf führt zu einer Belastung der nachgeschalteten Rauchgaswaschanlage 10 mit diesen Schadstoffen. Die Rauchgaswäsche, erfolgt mit Wasser. Dieses ist wegen der Schwefeldioxidanteile und Halogenide in einem Rauchgas stets sauer. Daher führt es nicht nur zur Abscheidung des restlichen Flugstaubes in der Rauchgas-Waschanlage 10, sondern zugleich auch zu einer Auslaugung des abgeschiedenen Flugstaubes. Dabei gehen die Schwermetalle und Quecksilberverbindungen in Lösung. Der zurückbleibende ausgelaugte Schlamm kann abfiltriert, getrocknet und zusammen mit dem über die Staubfilteranlage 9 abgezogenen Flugstaub über die Zumischstation 14 in die Schmelzkammer 2 zurückgeführt und dort eingeschmolzen werden.

Die der Filtervorrichtung 17 entströmende flüssige Phase wird über die nachgeschaltete Anlage 20 zur Schwermetallausfällung unter gleichzeitiger Zugabe eines Fällungsmittels, wie z.B. Kalziumhydroxid oder Natronlauge sowie Natriumsulfid oder TMT 15, abgeschieden. Diese beiden letztgenannten Stoffe haben die Eigenschaft, daß auch das Quecksilber mit abgeschieden wird. Während das nunmehr von den Schwermetallen befreite Abwasser ausgeschleust wird, kann der Schwermetallschlamm zur Zerstörung der Dioxine in einem geschlossenen Behältnis 22 thermisch aufgeheizt werden. Diese Aufheizung erfolgt im Ausführungsbeispiel unter Luftabschluß bei über 300° C. Dabei ist es möglich, die Quecksilberverbindung über eine Kühlfalle (nicht dargestellt) separat aufzufangen. Diese verbleibenden Schwermetallverbindungen lassen sich nun entweder in einer Sonderdeponie lagern, oder zu den reinen Metallen aufarbeiten. Auch bei der weniger aufwendigen Lagerung in einer Sonderdeponie hat das Verfahren den Vorteil, daß die zu lagernden Mengen nur wenige Prozente der ursprünglich anfallenden Staubmengen betragen. Sie sind auch geringer als jene bei Anwendung des Verfahrens gemäß der DE-C-36 14 814 anfallenden, dem Vorfluter zuzuführende Mengen.

Es ist auch möglich, auf die Abfiltration des ausgelaugten Flugstaubanteils in der Filtervorrichtung 17 zu verzichten. In diesem Fall würde der ausgelaugte Flugstaub zusammen mit den ausgefällten Schwermetallen aus dem Abschlämmwasser abgetrennt werden. Andererseits ist es möglich, in der Rauchgasleitung 8 vor der DeNOₓ-Anlage 11 einen Arsenabsorber zum Schutz der DeNOₓ-Anlage einzubauen.

### Figur 2:

Eine Kohle 1 wird in eine Verbrennungskammer 2 eingebracht und dort verbrannt. Ein großer Teil der Verbrennungsrückstände fällt als Flugstaub an und verläßt den Verbrennungskessel zusammen mit den Rauchgasen 24. Direkt hinter die Verbrennungskammer 2 geschaltet befindet sich ein DeNOₓ-Filter 25, in dem die im Rauchgas enthaltenen Stickoxide zu Stickstoff reduziert werden. Der Prozeß findet bei einer Temperatur von ca. 400°C statt und nutzt die Temperatur der noch heißen Rauchgase 24. Nach weiterer Abkühlung gelangen die so entstickten Rauchgase 26 in einen Staubfilter 9, der zum Beispiel ein Elektrofilter ist. In diesem werden die Flugstaubpartikel aufgrund von statischer Aufladung an entsprechend gegenteilig gepolten Filterkörpern aus dem Rauchgas abgeschieden. Der so gewonnene Flugstaub 27 wird mit Glaszuschlägen 33 versetzt und in einer Vorrichtung 14 vermischt und homogenisiert.

Unter Hinzufügen von Wasser und gegebenenfalls weiteren Bindemitteln, zum Beispiel einem Teil des in der DeSOₓ-Anlage anfallenden Gipses 28 werden aus der bei 14 erhaltenen Mischung unter Druck und gegebenenfalls erhöhter Temperatur größere Formkörper hergestellt (30). Diese weisen einen Durchmesser zwischen 0,5 und 10 cm auf und werden dementsprechend als Pellets oder Briketts bezeichnet. Ihre Festigkeit ist dabei mindestens so bemessen, daß sie unzerfallen als ganze Körper 31 in den Verbrennungskessel 2 zurückgeführt werden können. Am Boden dieses Kessels 2 befindet sich aufgrund der hohen Verbrennungstemperatur von ca. 1600°C eine Flüssigasche. In diese werden die Formkörper 31 möglichst direkt eingebracht, um dort aufgeschmolzen zu werden. Die Flüssigasche wird kontinuierlich aus dem Verbrennungskessel 2 abgelassen und durch Abschrecken in eine Schlacke 32 überführt. Auch dieses Verfahren ist so eingestellt, daß die Schlacke 32, welche aufgrund der Zuschläge 33 eine glasartige Beschaffenheit aufweist, keine pulverförmigen Einschlüsse von Flugstaub 27 mehr enthält. Sie besitzt eine Beschaffenheit, die sie zur Verwendung als Baumaterial bestens geeignet macht. Die Einbindung der Verunreinigungen, insbesondere der Schwermetalle in der Schlacke 32 ist so stabil, daß auch hier keine Gefahr des Auswaschens besteht.

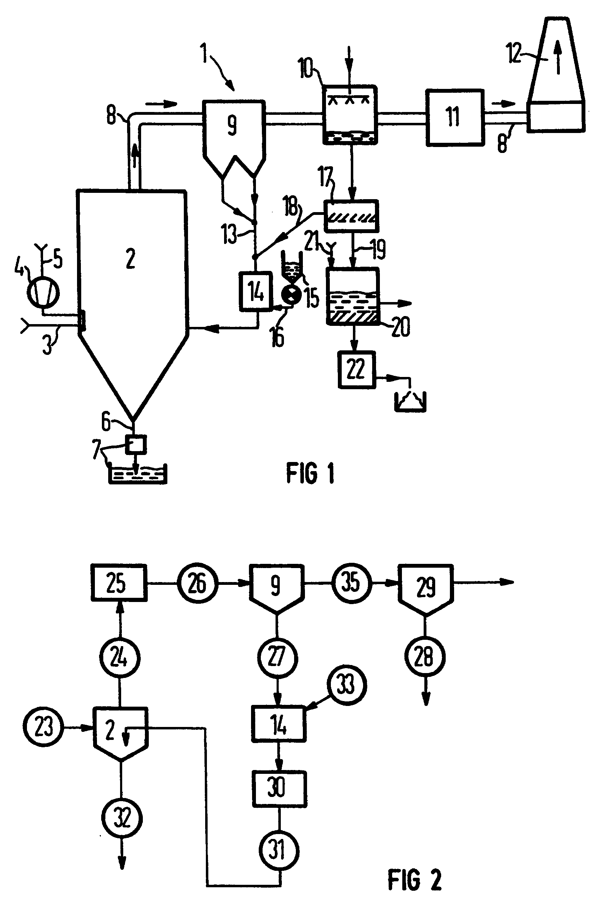

Die in der Figur 2 nicht dargestellte saure Rauchgaswäsche kann in die DeSoₓ-Anlage 29 integriert sein oder sich an diese anschließen. Ebenfalls nicht dargestellt sind daher auch weitere Vorrichtungen zur Behandlung des in der Rauchgaswäsche anfallenden Schlamms und des Waschwasssers.

## Patentansprüche

1. Verfahren zur Reinigung von Rauchgasen von Verbrennungsgroßanlagen, bei dem der größte Teil der von den Rauchgasen mitgeführten Feststoffe (Flugasche) durch trockene Staubfilterung (9) abgetrennt, die restlichen Feststoffe in einer nachgeschaltenen sauren Rauchgaswäsche (10) abgeschieden werden, und wobei die Feststoffe der trockenen Staubfilterung mit den enthaltenen Schwermetallen gegebenenfalls zusammen mit Müll und/oder zu einem Glas schmelzenden Zuschlägen in der Brennkammer der Verbrennungsgroßanlage eingeschmolzen und die in der Rauchgaswäsche abgeschlämmten Feststoffe ausgelaugt und filtriert werden.

2. Verfahren nach Anspruch 1,
**dadurch gekennzeichnet,** daß als Müll insbesondere schwermetallbelasteter Müll, wie z. B. verbrauchte Filter, Katalysatoren und dergleichen, in feingemahlener Form zugesetzt werden.

3. Verfahren zur Reinigung von Rauchgasen von Verbrennungsgroßanlagen, bei dem der größte Teil der von den Rauchgasen mitgeführten Feststoffe (Flugasche) durch trockene Staubfilterung (9) abgetrennt, die restlichen Feststoffe in einer nachgeschaltenen sauren Rauchgaswäsche (10) abgeschieden werden, und wobei die Feststoffe der trockenen Staubfilterung zusammen mit verbrauchten Katalysatoren als Zuschlag in der Brennkammer der Verbrennungsgroßanlage eingeschmolzen und die in der Rauchgaswäsche abgeschlämmten Feststoffe ausgelaugt und filtriert werden.

4. Verfahren nach Anspruch 3,
**dadurch gekennzeichnet,** daß die Feststoffe der trockenen Staubfilterung zusammen mit zu einem Glas schmelzenden, weiteren Zuschlägen eingeschmolzen werden.

5. Verfahren nach Anspruch 3 oder 4,
**dadurch gekennzeichnet,** daß den Feststoffen vor dem Einschmelzen zunächst eventuell vorhandene Wertstoffe entzogen werden.

6. Verfahren nach mindestens einem der Ansprüche 3 bis 5,
**dadurch gekennzeichnet,** daß die Katalysatoren in feingemahlener Form zugesetzt werden.

7. Verfahren nach mindestens einem der Ansprüche 1 bis 6,
**dadurch gekennzeichnet,** daß der in der Rauchgaswäsche (10) abgeschlämmte Feststoff entwässert und in einer Sonderdeponie abgelagert wird.

8. Verfahren nach mindestens einem der Ansprüche 1 bis 6,
**dadurch gekennzeichnet,** daß der in der Rauchgaswäsche (10) abgeschlämmte Feststoff ebenfalls eingeschmolzen wird.

9. Verfahren nach mindestens einem der Ansprüche 1 bis 6,
**dadurch gekennzeichnet,** daß das filtrierte Abschlämmwasser mit einem Fällungsmittel versetzt und einer Schwermetallfällung unterzogen wird.

10. Verfahren nach Anspruch 9,
**dadurch gekennzeichnet,** daß die ausgefällten Schwermetallschlämme zur Abtrennung von Quecksilberverbindungen thermisch behandelt werden.

11. Verfahren nach Anspruch 8,
**dadurch gekennzeichnet,** daß der in der Rauchgaswäsche abgeschlämmte Feststoff zur Abtrennung der Quecksilberverbindungen thermisch behandelt wird.

12. Verfahren nach mindestens einem der Ansprüche 1 bis 11,
**dadurch gekennzeichnet,** daß das Einschmelzen der Feststoffe in der Flüssigasche einer Schmelzkammerfeuerungsanlage vorgenommen wird.

13. Verfahren nach mindestens einem der Ansprüche 1 bis 6,
**dadurch gekennzeichnet,** daß die abgeschiedenen bzw. abgetrennten Feststoffe (Flugasche) (27) vor dem Einschmelzen zu größeren Formkörpern (31) verarbeitet, insbesondere pelletiert werden.

14. Verfahren nach Anspruch 13,
**dadurch gekennzeichnet,** daß die Formkörper (31) mit einem Durchmesser von 0,5 bis 10 cm hergestellt werden.

15. Verfahren nach Anspruch 14,
**dadurch gekennzeichnet,** daß die Formkörper (31) mit einem Durchmesser von 1 bis 5 cm hergestellt werden.

16. Verfahren nach mindestens einem der Ansprüche 13 bis 15,
**dadurch gekennzeichnet** , daß die Formkörper (31) mit Hilfe von Bindemitteln hergestellt werden.

17. Verfahren nach mindestens einem der Ansprüche 13 bis 16,
**dadurch gekennzeichnet,** daß nur der Feinstaubanteil der Flugasche (27) zu Formkörpern (31) verarbeitet wird und daß der Grobstaub direkt in die flüssige Asche zurückgeführt wird.

18. Verfahren nach mindestens einem der Ansprüche 1 bis 17,
**dadurch gekennzeichnet,** daß die abgeschiedenen bzw. abgetrennten Feststoffe vor dem Einschmelzen mit zu einem Glas schmelzenden Zuschlägen (33) vermischt und fein vermahlen werden.

19. Verfahren nach Anspruch 18,
**dadurch gekennzeichnet,** daß als Zuschlag (33) ein unterhalb 1000 °C schmelzendes Glas verwendet wird.

20. Verfahren nach Anspruch 18 oder 19,
**dadurch gekennzeichnet,** daß als weiterer Zuschlag Calciumcarbonat CaCO₃ verwendet wird.

21. Verfahren nach Anspruch 18 bis 20,
**dadurch gekennzeichnet,** daß als Zuschlag ein zwischen 500 und 800 °C schmelzendes Glas verwendet wird.

22. Verfahren nach mindestens einem der Ansprüche 18 bis 21,
**dadurch gekennzeichnet,** daß als Zuschlag Altglas, insbesondere Altglasscherben, verwendet wird.

23. Verfahren nach Anspruch 18,
**dadurch gekennzeichnet,** daß als Zuschlag Kalziumoxid verwendet wird.

24. Verfahren nach mindestens einem der Ansprüche 1 bis 23,
**dadurch gekennzeichnet,** daß die Rauchgase in den Rauchgaskanal der Verbrennungsanlage durch einen zusätzlich eingebauten Arsenabsorber geleitet werden.

25. Verfahren nach mindestens einem der Ansprüche 1 bis 24,
**dadurch gekennzeichnet,** daß man die Flüssigasche in Wasser einlaufen läßt und so durch Abschrecker die Schlacke (32) erzeugt.

26. Verfahren nach Anspruch 9,
**dadurch gekennzeichnet,** daß als Fällungsmittel zur gleichzeitigen Quecksilberabscheidung Natriumsulfid verwendet wird.

27. Verfahren nach Anspruch 9,
**dadurch gekennzeichnet,** daß als Fällungsmittel zur gleichzeitigen Quecksilberabscheidung handelsübliches TMT 15, das heißt Trimercapto-s-triazin in 15 %iger Natriumsalzlösung, verwendet wird.

28. Verfahren nach Anspruch 10 oder 11,
**dadurch gekennzeichnet,** daß die thermische Behandlung zur gleichzeitigen Zersetzung der Dioxine unter Luftabschluß erfolgt.

29. Vorrichtung zur Durchführung des Verfahrens nach Anspruch 1,
**dadurch gekennzeichnet,** daß in der von der Brennkammer (2) zum Kamin führenden Rauchgasleitung (8) hintereinander eine Staubfilteranlage (9) und eine Rauchgaswaschanlage (10) angeordnet sind, die Staubabzugsleitung (13) der Staubfilteranlage (9) an die als eine Ascheschmelzkammer betreibbare Brennkammer (2) und die Rauchgaswaschanlage an eine Abschlämmvorrichtung (17) für den Flugstaub angeschlossen ist.

30. Vorrichtung nach Anspruch 29,
**dadurch gekennzeichnet,** daß die Staubabzugsleitung über eine Zumischstation (14) für einen Zuschlag in die Ascheschmelzkammer (2) geführt ist.

31. Vorrichtung zur Durchführung des Verfahrens nach Anspruch 3,
**dadurch gekennzeichnet,** daß in der von der Brennkammer (2) zum Kamin führenden Rauchgasleitung (8) hintereinander eine Staubfilteranlage (9) und eine Rauchgaswaschanlage (10) angeordnet sind, die Staubabzugsleitung (13) der Staubfilteranlage (9) an die als eine Ascheschmelzkammer betreibbare Brennkammer (2) und die Rauchgaswaschanlage an eine Abschlämmvorrichtung (17) für den Flugstaub angeschlossen ist, und daß die Staubabzugsleitung über eine Zumischstation (14) für einen Zuschlag in die Ascheschmelzkammer geführt ist.

32. Vorrichtung nach Anspruch 30 oder 31,
**dadurch gekennzeichnet,** daß eine Pelletiervorrichtung in der Staubabzugsleitung (13) zwischen der Zumischstation (14) und der Schmelzkammer (2) eingebaut ist.

33. Vorrichtung nach Anspruch 29 oder 31,
**dadurch gekennzeichnet,** daß die Abschlämmvorrichtung (17) feststoffaustragsseitig an die Schmelzkammer (2) und filtratseitig an eine Schwermetallausfällanlage (20) angeschlossen ist.

34. Vorrichtung nach Anspruch 33,
**dadurch gekennzeichnet,** daß die Schwermetallausfällanlage (20) zur Quecksilberabtrennung feststoffseitig an eine thermische Aufheizanlage (22) angeschlossen ist.

35. Vorrichtung nach Anspruch 34,
**dadurch gekennzeichnet,** daß die thermische Aufheizanlage (22) zur gleichzeitigen Zersetzung der Dioxine und Furane einerseits und zur Quecksilberabtrennung andererseits unter Luftabschluß betreibbar ist.

## Claims

1. A method for cleaning smoke gases from large combustion units, in which the largest part of the solid matter (flue ash) carried by the smoke gases is separated by dry dust filtering (9), the remaining solid matter is precipitated in a subsequent acid smoke gas scrubbing unit (10), and wherein the solid matter of the dry dust filtering is melted down with the heavy metals contained therein, possibly together with waste and/or admixtures melting to form a glass, in the combustion chamber of the large combustion unit, and the solid matter elutriated in the smoke gas scrubbing is extracted and filtered.

2. A method according to claim 1, characterised in that in particular waste laden with heavy metal, such as, for example, used filters, catalysts and the like, are added as waste in a finely ground form.

3. A method for cleaning smoke gases from large combustion units, in which the largest part of the solid matter (flue ash) carried by the smoke gases is separated by dry dust filtering (9), the remaining solid matter is precipitated in a subsequent acid smoke gas scrubbing unit (10), and wherein the solid matter of the dry dust filtering is melted down together with used catalysts as the admixture in the combustion chamber of the large combustion unit, and the solid matter elutriated in the smoke gas scrubbing is extracted and filtered.

4. A method according to claim 3, characterised in that the solid matter of the dry dust filtering is melted down together with further admixtures melting to form a glass.

5. A method according to claim 3 or 4, characterised in that valuable substances which are possibly present are extracted firstly from the solid matter before melting down.

6. A method according to at least one of claims 3 to 5, characterised in that the catalysts are added in a finely ground form.

7. A method according to at least one of claims 1 to 6, characterised in that the solid matter elutriated in the smoke gas scrubbing unit (10) is dehydrated and deposited in a special dust tip.

8. A method according to at least one of claims 1 to 6, characterised in that the solid matter elutriated in the smoke gas scrubbing unit (10) is also melted down.

9. A method according to at least one of claims 1 to 6, characterised in that the filtered elutriating water is mixed with a precipitating agent and subjected to heavy-metal precipitation.

10. A method according to claim 9, characterised in that the precipitated heavy metal deposits are treated thermally for the purpose of separating mercury compounds.

11. A method according to claim 8, characterised in that the solid matter elutriated in the smoke gas scrubbing is treated thermally for the purpose of separating the mercury compounds.

12. A method according to at least one of claims 1 to 11, characterised in that the melting down of the solid matter is undertaken in the liquid ash of a melting chamber furnace installation.

13. A method according to at least one of claims 1 to 6, characterised in that, before being melted down, the precipitated or separated solid matter (flue ash) (27) is processed, in particular pelletized, to form larger moulded bodies (31).

14. A method according to claim 13, characterised in that the moulded bodies (31) are produced with a diameter of 0.5 to 10 cm.

15. A method according to claim 14, characterised in that the moulded bodies (31) are produced with a diameter of 1 to 5 cm.

16. A method according to at least one of claims 13 to 15, characterised in that the moulded bodies (31) are produced with the aid of binding agents.

17. A method according to at least one of claims 13 to 16, characterised in that only the fine-dust portion of the flue ash (27) is processed to form moulded bodies (31), and in that the coarse dust is fed back directly into the liquid ash.

18. A method according to at least one of claims 1 to 17, characterised in that, before being melted down, the precipitated or separated solid matter is mixed with admixtures (33) melting to form a glass and is finely ground.

19. A method according to claim 18, characterised in that a glass melting below 1000°C is used as the admixture (33).

20. A method according to claim 18 or 19, characterised in that calcium carbonate CaCO₃ is used as a further admixture.

21. A method according to claim 18 to 20, characterised in that a glass melting between 500 and 800°C is used as the admixture.

22. A method according to at least one of claims 18 to 21, characterised in that old glass, in particular old glass fragments, is used as the admixture.

23. A method according to claim 18, characterised in that calcium oxide is used as the admixture.

24. A method according to at least one of claims 1 to 23, characterised in that the smoke gases are directed into the smoke gas channel of the combustion plant through an additionally built-in arsenic absorber.

25. A method according to at least one of claims 1 to 24, characterised in that the liquid ash is allowed to run into water and the slag (32) is thus produced by quenching.

26. A method according to claim 9, characterised in that sodium sulphide is used as the precipitating agent for simultaneous mercury separation.

27. A method according to claim 9, characterised in that commercially available TMT 15, i.e. trimercapto-s-triazine in 15% sodium salt solution, is used as the precipitating agent for simultaneous mercury separation.

28. A method according to claim 10 or 11, characterised in that the thermal treatment for simultaneous decomposition of the dioxins occurs with exclusion of air.

29. A device for carrying out the method according to claim 1, characterised in that arranged in series in the smoke gas line (8) leading from the combustion chamber (2) to the chimney there are a dust filter unit (9) and a smoke gas scrubbing unit (10), the dust discharge line (13) of the dust filter unit (9) being connected to the combustion chamber (2) which can be operated as an ash melting chamber and the smoke gas scrubbing unit being connected to an elutriating device (17) for the flue dust.

30. A device according to claim 29, characterised in that the dust discharge line is directed into the ash melting chamber (2) by way of a mixing station (14) for an admixture.

31. A device for carrying out the method according to claim 3, characterised in that arranged in series in the smoke gas line (8) leading from the combustion chamber (2) to the chimney there are a dust filter unit (9) and a smoke gas scrubbing unit (10), the dust discharge line (13) of the dust filter unit (9) being connected to the combustion chamber (2) which can be operated as an ash melting chamber and the smoke gas scrubbing unit being connected to an elutriating device (17) for the flue dust, and in that the dust discharge line is directed into the ash melting chamber by way of a mixing station (14) for an admixture.

32. A device according to claim 30 or 31, characterised in that a pelletizing device is built in the dust discharge line (13) between the mixing station (14) and the melting chamber (2).

33. A device according to claim 29 or 31, characterised in that the elutriating device (17) is connected on the solid-matter discharge side to the melting chamber (2) and on the filtrate side to a heavy metal precipitating unit (20).

34. A device according to claim 33, characterised in that the heavy metal precipitating unit (20) is connected to a thermal heating unit (22) on the solid matter side for the separation of mercury.

35. A device according to claim 34, characterised in that the thermal heating unit (22) for simultaneous decomposition of the dioxins and furans, on the one hand, and for mercury separation, on the other hand, can be operated with exclusion of air.

## Revendications

1. Procédé d'épuration de gaz de futée d'installations d' incinération de grandes dimensions, qui consiste à séparer la plus grande partie des matières solides (cendres volantes) entraînées avec les gaz de fusée par une filtration de poussières (9) par voie sèche, à séparer les matières solides restantes par un lavage acide (10) des gaz de fumée en aval, à fondre les matières solides de la filtration de poussières par voie sèche avec les métaux lourds qu'elles renferment, le cas échéant avec des déchets et/ou des additifs fondant en un verre dans la chambre de combustion de l'installation d'incinération de grandes dimensions et à lixivier et à filtrer les matières solides débourbées dans le lavage de gaz de fumée.

2. Procédé suivant la revendication 1,
caractérisé ai ce qu'il consiste à ajouter came déchets, notamment comme déchets chargés en métaux lourds, comme par exemple un filtre usé, des catalyseurs et analogue sous forme finement divisée.

3. Procédé d'épuration de gaz de fusée d'installations d'incinération de grandes dimensions, qui consiste à séparer la plus grande partie des matières solides (cendres volantes) entraînées avec les gaz de fusée par une filtration de poussières (9) par voie sèche, à séparer les matières solides restantes par un lavage acide (10) des gaz de fumée en aval, à fondre les matières solides de la filtration de poussières par voie sèche en même temps que des catalyseurs usés en tant qu'additifs dans la chambre de combustion de l'installation d'incinération de grandes dimensions et à lixivier et à filtrer les matières solides débourbées dans le lavage de gaz de fusée.

4. Procédé suivant la revendication 3,
caractérisé en ce qu'il consiste à fondre les matières solides de la filtration de poussières par voie sèche avec les autres additifs fondant en un verre.

5. Procédé suivant la revendication 3 ou 4,
caractérisé en ce qu'il consiste à retirer d'abord des matières de valeur éventuellement présentes des matières solides avant la fusion.

6. Procédé suivant au moins l'une des revendications 3 à 5,
caractérisé en ce qu'il consiste à ajouter les catalyseurs sous forme finement divisée.

7. Procédé suivant au moins l'une des revendications 1 à 6,
caractérisé en ce qu'il consiste à déshydrater la matière solide débourbée dans le lavage de gaz de fumée (10) et à la déposer dans une décharge.

8. Procédé suivant au moins l'une des revendications 1 à 6,
caractérisé en ce qu'il consiste à fondre également la matière solide débourbée dans le lavage de gaz de fumée (10).

9. Procédé suivant au moins l'une des revendications 1 à 6,
caractérisé en ce qu'il consiste à mélanger l'eau de débourbage filtrée à un agent de précipitation et à la soumettre à une précipitation des métaux lourds.

10. Procédé suivant la revendication 9,
caractérisé en ce qu'il consiste à traiter thermiquement les boues de métaux lourds précipités pour séparer des composés du mercure.

11. Procédé suivant la revendication 8,
caractérisé en ce qu'il consiste à traiter thermiquement la matière solide débourbée dans le lavage de gaz de fumée pour séparer des composés du mercure.

12. Procédé suivant au moins l'une des revendications 1 à 11,
caractérisé en ce qu'il consiste à effectuer la fusion des matières solides dans la cendre liquide d'une installation de chauffe à chambre de fusion.

13. Procédé suivant au moins l'une des revendications 1 à 6,
caractérisé en ce qu'il consiste à transformer, notamment à bouleter, les matières solides (cendres volantes) (27) déposées ou séparées avant la fusion, en pièces moulées (31) plus grandes.

14. Procédé suivant la revendication 13,
caractérisé en ce qu'il consiste à fabriquer les pièces moulées (31) en leur donnant un diamètre de 0,5 à 10 cm.

15. Procédé suivant la revendication 14,
caractérisé en ce qu'il consiste à fabriquer les pièces moulées (31) en leur donnant un diamètre de 1 à 5 cm.

16. Procédé suivant l'une au moins des revendications 13 à 15,
caractérisé an ce qu'il consiste à fabriquer les pièces moulées (31) à l'aide de liants.

17. Procédé suivant l'une au moins des revendications 13 à 16,
caractérisé an ce qu'il consiste à ne transformer que la proportion de poussières fines des cendres volantes (27) en pièces moulées (31) et à retourner directement la poussière grossière à la cendre liquide.

18. Procédé suivant l'une au moins des revendications 1 à 17,
caractérisé en ce qu'il consiste à mélanger les matières solides déposées ou séparées avant la fusion à des additifs (33) fondant en un verre, et à les broyer finement.

19. Procédé suivant la revendication 18,
caractérisé en ce qu'il consiste à utiliser comme additif (33) du verre fondant à une température intérieure à 1000°C.

20. Procédé suivant la revendication 18 ou 19,
caractérisé en ce qu'il consiste à utiliser comme autre additif du carbonate de calcium CaCO₃.

21. Procédé suivant 1 'une des revendications 18 à 20,
caractérisé en ce qu'il consiste à utiliser came additif du verre fondant entre 500 et 800°C

22. Procédé suivant l'une au moins des revendications 18 à 21,
caractérisé an ce qu'il consiste à utiliser comme additif du verre ayant subi un vieillissement, notamment des tessons de verre vieilli.

23. Procédé suivant la revendication 18,
caractérisé en ce qu'il consiste à utiliser comme additif de l'oxyde de calcium.

24. Procédé suivant l'une au moins des revendications 1 à 23,
caractérisé en ce qu'il consiste à envoyer les gaz de fumée dans le canal pour les gaz de fumée de l'installation d'incinération, en passant par un absorbeur d'arsenic monté en supplément.

25. Procédé suivant l'une au moins des revendications 1 à 24,
caractérisé en ce qu'il consiste à envoyer la cendre liquide dans de l'eau et à produire ainsi des scories (32) par refroidissement.

26. Procédé suivant la revendication 9,
caractérisé en ce qu'il consiste à utiliser le sulfure de sodium comme agent de précipitation, en vue de séparer simultanément du mercure.

27. Procédé suivant la revendication 9,
caractérisé en ce qu'il consiste à utiliser, comme agent de précipitation en vue de séparer simultanément du mercure, du TMT 15 usuel dans le commerce, c'est-à-dire de la trimercapto-S-triazine en solution dans du sel de sodium à 15%.

28. Procédé suivant la revendication 10 ou 11,
caractérisé en ce qu'il consiste à effectuer le traitment thermique, pour la décomposition simultanée des dioxines, à l'abri de l'air.

29. Installation pour la mise en oeuvre du procédé suivant la revendication 1,
caractérisée en ce que, sur le conduit pour les gaz de fumée (8) menant de la chambre de combustion (2) à la cheminée, sont montées successivement une installation de filtration de poussières (9) et une installation de lavage des gaz de fumée (10), le conduit d' évacuation de la poussière (13) de l'installation de filtration de la poussière (9) communiquant avec la chambre de combustion (2) servant de chambre de fusion des cendres et l'installation de lavage du gaz de fumée avec un dispositif de débourbage (17) de la cendre volante.

30. Installation suivant la revendication 29,
caractérisée en ce que le conduit d'évacuation de la poussière mène, par un poste (14) d'addition d'un additif, à la chambre de fusion des cendres (2).

31. Installation pour la mise en oeuvre du procédé suivant la revendication 3,
caractérisée en ce qu'il est monté dans le conduit (8) pour le gaz de fumée menant de la chambre (2) de combustion à la cheminée successivement une installation (9) de filtration de poussière et une installation (10) de lavage des gaz de fumée, le conduit (13) d'évacuation de la poussière de l'installation (9) de filtration de poussière est relié à la chambre (2) de combustion qui peut faire office de chambre de fusion de cendres et l'installation de lavage de gaz de fumée a un dispositif (17) de débourbage de la cendre volante et en ce que le conduit d' évacuation des poussières mène en passant par un poste (14) de mélange d'un additif à la chambre de fusion des cendres.

32. Installation suivant la revendication 30 ou 31,
caractérisée en ce qu'un dispositif de bouletage est inséré dans le conduit (13) d'évacuation des poussières entre le poste (14) de mélange et la chambre (2) de fusion.

33. Installation suivant la revendication 29 ou 31,
caractérisée en ce que le dispositif de débourbage (17) est raccordé, du côté de la sortie des matières solides, à la chambre de fusion (2) et, du côté du filtrat, à une installation de précipitation des métaux lourds (20).

34. Installation suivant la revendication 33,
caractérisée en ce que l'installation de précipitation des métaux lourds (20) est raccordée du côté de la sortie des matières solides, en vue de séparer le mercure, à une installation de chauffage (22) thermique.

35. Installation suivant la revendication 34,
caractérisée en ce que l'installation de chauffage (22) thermique peut fonctionner à l'abri de l'air, pour décomposer simultanément les dioxines et les furannes, d'une part, et pour séparer le mercure, d'autre part.
